(19) Europäisches Patentamt
European Patent Office
Office européen des brevets

(11) Veröffentlichungsnummer: **0 131 121**
**B1**

(12) # EUROPÄISCHE PATENTSCHRIFT

(45) Veröffentlichungstag der Patentschrift: **02.08.89**

(51) Int. Cl.⁴: **C 01 B 33/18**, B 01 D 17/00

(21) Anmeldenummer: **84105728.4**

(22) Anmeldetag: **19.05.84**

(54) **Oxidische oder silicatische Teilchen, deren an der Oberfläche befindliche Hydroxylgruppen zumindest zu einem Teil durch organische Gruppen ersetzt sind, Verfahren zu ihrer Herstellung und ihre Verwendung zum Destabilisieren von Emulsionen und zur Zerstörung von Schäumen.**

(30) Priorität: **01.06.83 DE 3319788**

(43) Veröffentlichungstag der Anmeldung: **16.01.85 Patentblatt 85/3**

(45) Bekanntmachung des Hinweises auf die Patenterteilung: **02.08.89 Patentblatt 89/31**

(84) Benannte Vertragsstaaten: **BE DE FR GB IT NL**

(56) Entgegenhaltungen:
**DE-A-2 123 573**
**DE-A-2 946 727**
**DE-B-1 115 927**
**DE-C-1 012 602**
**US-A-3 887 487**
**US-A-4 062 693**

(73) Patentinhaber: **Th. Goldschmidt AG, Goldschmidtstrasse 100 Postfach 101461, D-4300 Essen 1 (DE)**

(72) Erfinder: **Grüning, Burkhard, Dr., Waldsaum 11, D-4300 Essen (DE)**
Erfinder: **Holtschmidt, Ulrich, Dr., Veddershang 11, D-4300 Essen (DE)**
Erfinder: **Koerner, Götz, Dr., Kantorie 126, D-4300 Essen (DE)**
Erfinder: **Rossmy, Gerd, Dr., Im Hadkamp 18, 4358 Haltern- Lavesum (DE)**

EP 0 131 121 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft oxidische oder silicatische Teilchen, insbesondere mit einer spezifischen Oberfläche von mindestens 50 $m^2/g$ und einer Teilchengröße von $\leq 40$ nm, wobei die an der Oberfläche befindlichen Hydroxylgruppen zumindest zu einem Teil durch organische Gruppen ersetzt sind. Die Erfindung betrifft ferner Verfahren zur Herstellung dieser modifizierten Teilchen sowie die Verwendung der Teilchen zum Destabilisieren von Wasser-in-Öl-Emulsionen und zur Zerstörung von Schäumen wäßriger Systeme.

Es ist bekannt, oxidische oder silicatische Teilchen mit siliciumorganischen Verbindungen zu behandeln, um die Oberfläche dieser Teilchen zu modifizieren. Hierdurch kann die Affinität der behandelten Teilchen zu dem umgebenden Medium beeinflußt werden. Die Modifizierung der Teilchen kann entweder auf physikalischem Wege durch Adsorption oder auf chemischem Wege dadurch erfolgen, daß die Modifizierungsmittel mit auf der Oberfläche der Teilchen befindlichen Gruppen, insbesondere Hydroxylgruppen, reagieren.

Aus der DE-OS-2 946 727 ist ein zur Trennung von Wasser-Öl-Gemischen dienendes Produkt bekannt, welches nach einem Verfahren hergestellt worden ist, bei dem man einen oberflächliche Hydroxylgruppen enthaltenden anorganischen Feststoff in einer ersten Stufe mit einer Verbindung der Formel

$$\begin{array}{c} R^1 \\ | \\ Y\text{-}Si\text{-}R\text{-}CH_2\text{-}X \\ | \\ R^2 \end{array}$$

in der

R ein zweiwertiger organischer Rest mit bis zu 20 C-Atomen ist,

$R^1$ und $R^2$ Halogenatome oder organische Reste mit bis zu 20 C-Atomen sind,

Y ein Halogenatom oder eine Gruppe der Formel $-OR^3$, in der $R^3$ ein Wasserstoffatom oder ein Alkylrest, Arylrest oder Acylrest mit bis zu 20 C-Atomen ist, und

X ein Halogenatom ist, und das in der ersten Stufe erhaltene Produkt bei erhöhter Temperatur mit einem N-substituierten Imid einer alkenylsubstituierten Dicarbonsäure umsetzt. Als anorganischer Feststoff werden Aluminiumoxid, Titandioxid, Zirkoniumoxid, Glas, Siliciumdioxid, insbesondere Kieselgel, sowie zeolithische Molekularsiebe verwendet. Diese Feststoffe liegen vor und nach der Modifizierung in Form kleiner Partikel vor, die eine Größe von 0,1 bis 3,0 mm haben. Aus diesen behandelten Teilchen wird eine Schicht in Form eines Filterbettes gebildet, durch welches die zu trennenden Wasser-Öl-Gemische geleitet werden. Beim Durchleiten durch die Filterschicht werden die Gemische in ihre Öl- und Wasserbestandteile getrennt.

Aus der DE-OS-2 743 691 ist ein Aluminiumhydroxid bekannt, welches oberflächlich mit einer überschüssigen Menge an Silan, dessen Hydrolysat oder Kondensat behandelt ist, wobei das Silan 2 oder 3 hydrolysierbare Gruppen an Silicium und eine Organogruppe mit einem Polyoxyalkylenrest aufweist. Eine Mischung dieses behandelten Aluminiumhydroxids mit unbehandeltem Aluminiumhydroxid kann einer Kunststoffmasse, z. B. Thermoplasten, zugegeben werden und bewirkt eine Herabsetzung der Viskosität der Kunststoffmasse und verringert die Entflammbarkeit bzw. Brennbarkeit dieser Kunststoffmasse.

Die DE-PS-2 743 682 betrifft oxidische oder silicatische Teilchen, welche mit einem speziellen Organosilan behandelt worden sind. Die Organosilane enthalten dabei hydrolysierbare Gruppen und innerhalb eines organischen Restes eine Polyoxyalkylenkette. Die Produkte werden als Füllstoffe in Anstrichmassen oder Kunststoffmassen, insbesondere in glasfaserverstärkten, wärmehärtenden Polyestermassen verwendet.

Gemäß DE-B-1 115 927 sind ferner Organopolysiloxane und ihre Verwendung als Antischaummittel bekannt, die Si-C-gebundene Alkoxypolyoxyalkylen-Gruppen aufweisen.

Es sind weiterhin gemäß DE-A-2 123 573 Antischaummittel auf Basis von Siloxan/Oxyalkylen-Copolymeren mit einem Gewichtsanteil von bis zu 10 % an hochdisperser Kieselsäure bekannt.

Der vorliegenden Erfindung liegt die Aufgabe zugrunde, oxidische oder silicatische Teilchen so zu modifizieren, daß sie in der Lage sind, destabilisierend auf Emulsionen, insbesondere Wasser-in-Öl-Emulsionen, und Schäume wäßriger Systeme einzuwirken, um eine Aufspaltung der Emulsionen und eine Trennung der Phasen oder einen Zusammenbruch der Schäume zu bewirken. Die gewünschten oxidischen oder silicatischen Teilchen sollen in der Lage sein, aus Erdölemulsionen, insbesondere frisch geförderten Erdölemulsionen, das in diesen enthaltene Wasser gegebenenfalls in Zusammenwirken mit anderen an sich bekannten Dismulgatoren abzuscheiden.

Überraschenderweise wurde gefunden, daß diese Aufgabe mit Hilfe oxidischer oder silicatischer Teilchen, deren oberflächliche Hydroxylgruppen zumindest zum Teil durch organische Gruppen ersetzt sind, dadurch gelöst werden kann, daß erfindungsgemäß die organischen Gruppen der Formel

$$\begin{array}{r} R^3 \\ | \\ R^1O(C_nH_{2n}O)_xR^2\text{-}Si\text{-}O\text{-} \\ | \\ R^4 \end{array}$$

$R^1$ = Alkylrest mit mindestens 9 Kohlenstoffatomen oder Alkylphenylrest mit mindestens 14 Kohlenstoffatomen,
$R^2$ = zweiwertiger Kohlenwasserstoffrest mit 2 bis 5 Kohlenstoffatomen,
$R^3$, $R^4$ = gleich oder verschieden und jeweils ein niederer Alkylrest mit 1 bis 4 Kohlenstoffatomen, der Rest Y (Y = hydrolysierbare Gruppe, insbesondere die Gruppe -Cl, -$OR^5$ oder -$NR^8_2$, wobei $R^5$ ein Alkylrest mit 1 bis 4 Kohlenstoffatomen und $R^8$ ein Wasserstoffrest oder ein Alkylrest mit 1 bis 4 Kohlenstoffatomen ist), der anteilige Sauerstoffrest $O_{0,5}$ oder Hydroxyrest,
n = 2 oder 3, jedoch bei mindestens 90 Mol-% der Gruppen n = 2,
x = 1 bis 50
entsprechen.

Als silicatische Teilchen werden vorzugsweise solche aus feinteiliger, insbesondere pyrolytisch erzeugter Kieselsäure einer spezifischen Oberfläche von mindestens 50 $m^2/g$ und einer Teilchengröße von $\leq 40$ nm verwendet. Die Angabe der Teilchengröße bezieht sich dabei auf die Größe der Teilchen vor der Modifizierung, also der primär vorliegenden Teilchen. Die modifizierten Teilchen können infolge Aggregation von dieser primär vorliegenden Teilchengröße abweichen.

Der Rest $R^1$ ist vorzugsweise ein von einem Fettalkohol abgeleiteter Alkylrest mit 10 bis 22 Kohlenstoffatomen. Er kann jedoch auch ein gegebenenfalls verzweigter Alkylrest sein, wie er beispielsweise mit Hilfe der Oxosynthese erhältlich ist. Der Rest $R^1$ kann weiterhin ein Alkylphenylrest sein, insbesondere der Octyl-, Isooctyl-, Nonyl-, Dodecylphenylrest. Der Rest $R^2$ ist ein zweiwertiger Kohlenwasserstoffrest, der bei einem Gehalt von 3 und mehr Kohlenstoffatomen auch verzweigt sein kann. Bevorzugt ist er der -$(CH_2)_3$-Rest.

Die Gruppe $C_nH_{2n}O$ ist eine Oxyalkylengruppen deren Oxyalkylenrest vorzugsweise der Oxyethylenrest ist. Es können jedoch bis zu 10 Mol-% der Oxyalkylenreste Oxypropylenreste sein. Die Kettenlänge dieses Oxyethylenrestes, ausgedrückt durch den Index x, beträgt 1 bis 50, vorzugsweise 2 bis 30.

Die Reste $R^3$ und $R^4$ sind gleich oder verschieden. Sie bedeuten einen niederen Alkylrest mit 1 bis 4 Kohlenstoffatomen, vorzugsweise den Methylrest. Sie können auch einen hydrolysierbaren Rest, insbesondere ein Chloratom, einen Alkoxyrest mit 1 bis 4 Kohlenstoffatomen, wie z. B. den Methoxy-, Ethoxy-, Propoxy-, Butoxy- oder iso-Butoxyrest, oder den Rest -$NR^8_2$, wobei $R^8$ innerhalb der Gruppe gleich oder verschieden sein kann und ein Wasserstoffatom oder ein Alkylrest mit 1 bis 4 Kohlenstoffatomen ist, bedeuten. Sie können aber auch die Bedeutung eines anteiligen Sauerstoffrestes $O_{0,5}$ oder einer Hydroxylgruppe haben.

Die die Teilchen modifizierenden Gruppen bestehen dementsprechend aus hydrophilen und hydrophoben Anteilen. Die dadurch bedingten grenzflächenaktiven Eigenschaften sind als ein wesentliches Charakteristikum dieser Gruppen zu betrachten. Obwohl sie durch ihre Pfropfung auf das Substrat unlöslich werden und damit eine wesentliche Eigenschaft oberflächenaktiver Verbindungen verlieren, verleihen sie durch ihre chemische Bindung an einen festen Träger diesem überraschende, besondere Eigenschaften und Wirksamkeiten an Phasengrenzflächen.

Die Verknüpfung der modifizierenden organischen Gruppen mit dem Substrat geschieht über eine C-Si-O-Brücke. Die Polyoxyalkylenkette ist über eine Kohlenstoffbrücke mit dem Siliciumatom der organischen Gruppe verbunden. Hierdurch wird erreicht, daß die organischen Gruppen hydrolytisch stabil an den anorganischen Träger gebunden sind.

Als anorganische Träger eignen sich z. B. Siliciumdioxid, Aluminiumoxid, Titandioxid und Zirkoniumdioxid, unter denen Siliciumdioxid bevorzugt wird. Die Teilchen sollten im allgemeinen nicht größer als 3 mm im Durchmesser sein, was von besonderer Bedeutung ist, wenn die spezifische Oberfläche der Teilchen in direktem Zusammenhang mit ihrer Größe steht.

Die Erfindung betrifft ferner Verfahren zur Herstellung der modifizierten oxidischen oder silicatischen Teilchen. Hierbei kann man erfindungsgemäß zwei Verfahrensvarianten unterscheiden. Die erste Variante des erfindungsgemäßen Verfahrens ist dadurch gekennzeichnet, daß man die Teilchen mit 5 bis 50 Gew.-% einer Verbindung der allgemeinen Formel

$$R^1O(C_nH_{2n}O)_xR^2\text{-}\underset{\substack{|\\ R^7}}{\overset{\substack{R^6\\ |}}{Si}}\text{-}Y$$

wobei
$R^1$ $R^2$, Y, n und x die oben angegebene Bedeutung haben und
$R^6$, $R^7$ niedere Alkylreste mit 1 bis 4 Kohlenstoffatomen oder Y-Reste sind,
gegebenenfalls in Gegenwart eines inerten flüssigen Mediums und gegebenenfalls bei Temperaturen bis 150°C umsetzt.

Als inertes flüssiges Medium kann man Ligroin, Toluol, Benzin oder andere Kohlenwasserstoffe verwenden. Die Reaktion des Modifizierungsmittels mit den Hydroxylgruppen der anorganischen Träger läuft bereits bei

relativ niedrigen Temperaturen, wie z. B. 40°C, ab. Jedoch kann durch eine Temperaturerhöhung bis zu etwa 150°C die Reaktionszeit abgekürzt werden.

In der zweiten Variante werden die oxidischen oder silicatischen Teilchen mit 2 bis 25 Gew.-% einer Verbindung der allgemeinen Formel

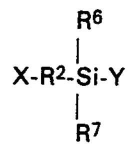

wobei

X ein Chlor- oder Bromrest ist,

gegebenenfalls in Gegenwart eines inerten flüssigen Mediums und gegebenenfalls bei Temperaturen bis 150°C umgesetzt und das erhaltene Produkt mit äquimolaren Mengen einer Verbindung der allgemeinen Formel

$R^1O(C_nH_{2n}O)_xM$

wobei

M ein Natrium- oder Kaliumrest ist, in einem inerten flüssigen Medium, gegebenenfalls bei erhöhter Temperatur,

umgesetzt.

Es können wiederum die gleichen Lösungsmittel wie bei der ersten Verfahrensmöglichkeit eingesetzt werden. Das bei der Umsetzung entstehende Alkalihalogenid wird zweckmäßig durch Extraktion mit Wasser entfernt.

Die erfindungsgemäß modifizierten anorganischen Teilchen zeigen die gewünschten dismulgierenden und schaumbrechenden Eigenschaften. Teilchen, die sich aufgrund ihrer Größe nicht zur Bildung einer ausreichend stabilen Dispersion eignen, wird man bevorzugt in Form eines Filterbettes anwenden, in dem diese Teilchen auch im Gemisch mit anderem, nicht modifizierten Material, wie Sand, vorliegen können. Damit diese erfindungsgemäß modifizierten Teilchen ihre Wirksamkeit entfalten können, ist es notwendig, die zu behandelnde Emulsion durch das Filterbett zu führen. Es hat sich dabei als vorteilhaft erwiesen, der Emulsion einen an sich bekannten organischen Dismulgator zuzusetzen. Teilchen, die nicht zu einer ausreichend stabilen Dispersion zu verteilen sind, eignen sich weniger zur Zerstörung eines Schaumes.

Es ist von Vorteil, zur Modifizierung eine feinteilige Kieselsäure zu verwenden, deren Teilchengröße nicht mehr als 10 µm beträgt. Bevorzugt wird eine pyrogene Kieselsäure verwendet, deren Primärteilchengröße $\leq$40 nm und deren spezifische Oberfläche mindestens 50 $m^2/g$ beträgt. Von besonderem Interesse sind pyrogen erzeugte Kieselsäuren, deren Primärteilchengröße 14 nm und deren spezifische Oberfläche $\geq$150 $m^2/g$ ist. Diese erfindungsgemäß modifizierten feinteiligen Kieselsäuren einer Primärteilchengröße $\leq$14 nm eignen sich insbesondere zum Abtrennen des Wassers aus frisch gefördertem, wasserhaltigen Erdöl. Es ist von Vorteil, die erfindungsgemäß modifizierten Kieselsäuren anderen an sich bekannten organischen Emulsionsspaltern zuzusetzen, da deren Wirkung hierdurch erheblich erhöht wird.

Es hat sich dabei gezeigt, daß die Wirkung der erfindungsgemäß modifizierten Kieselsäure entsprechend dem Grad ihrer Verteilung, die zu einem wesentlichen Teil durch die Primärteilchengröße der Kieselsäure bestimmt wird, zunimmt. Vorzugsweise setzt man die erfindungsgemäß modifizierte feinteilige Kieselsäure der zu behandelnden Emulsion in Form einer Suspension in einem inerten Lösungsmittel, z. B. Toluol, zu. Besonders gute Ergebnisse werden erhalten, wenn man bei der Herstellung der Stammsuspension die Feinverteilung der Kieselsäure durch einen hochtourigen Rührer oder durch Einwirkung von Ultraschall begünstigt. Zur Dismulgierung von Rohöl genügen im allgemeinen 1 bis 10 ppm der modifizierten feinteiligen Kieselsäure.

Die erfindungsgemäß modifizierte feinteilige Kieselsäure ist ferner hervorragend geeignet, aus wäßrigen Systemen gebildete Schäume, z. B. Schäume tensidischer Lösungen, Schäume von Textilbehandlungsflotten oder Gärmedien, zu beseitigen. Zweckmäßig verteilt man die modifizierte Kieselsäure in flüssigen Trägern, z. B. Siliconölen, und setzt diese Suspensionen dem Schaumsystem zu. Im allgemeinen genügen auch hier 1 bis 10 ppm modifizierte Kieselsäure. Die zur Entschäumung zugesetzte Kieselsäure stört im Gegensatz zu vielen Entschäumern des Standes der Technik bei der weiteren Verarbeitung oder Verwendung der entschäumten Produkte nicht.

In den folgenden Beispielen wird die Herstellung der erfindungsgemäß modifizierten Kieselsäure sowie die erfindungsgemäße Verwendung zum Spalten von Emulsionen und Entschäumen gezeigt.

**Beispiel 1**

50 g einer feinteiligen pyrogenen Kieselsäure mit einer spezifischen Oberfläche von 200 $m^2/g$ werden in 700 ml Benzin (Siedebereich 35 bis 40°C) zusammen mit 17 g eines Alkoxypolyoxyalkylentrialkoxysilans der mittleren Formel

$n\text{-}C_{16}H_{33}O[CH_2CH_2O]_{20}\text{-}(CH_2)_3\text{-}Si(OCH_3)_3$

unter intensivem Rühren 20 h unter Rückfluß erhitzt. Nach dem Abkühlen wird filtriert. Der Rückstand wird im Soxhlet 24 h mit Toluol extrahiert. Das Produkt wird bei 15 Torr ($20 \cdot 10^2$ Pa) und 60°C getrocknet. Die Elementaranalyse ergibt einen Kohlenstoffgehalt von 12,8 % C.

**Beispiel 2**

50 g einer feinteiligen pyrogenen Kieselsäure mit einer spezifischen Oberfläche von 200 $m^2/g$ werden in 600 ml Ligroin (Siedebereich 90 bis 100°C) zusammen mit 10 g eines Alkylaryloxypolyoxyalkylentrialkoxysilans der mittleren Formel

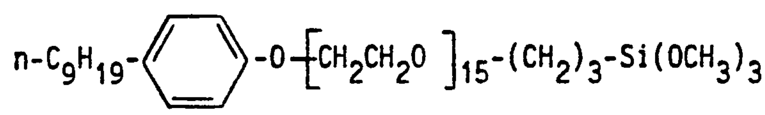

unter intensivem Rühren 10 h unter Rückfluß erhitzt. Nach dem Abkühlen wird filtriert. Der Rückstand wird im Soxhlet 24 h mit Toluol extrahiert. Das Produkt wird bei 15 Torr ($20 \cdot 10^2$ Pa) und 60°C getrocknet. Die Elementaranalyse ergibt einen Kohlenstoffgehalt von 8,3 % C.

**Beispiel 3**

50 g einer feinteiligen pyrogenen Kieselsäure mit einer spezifischen Oberfläche von 200 $m^2/g$ werden in 600 ml Ligroin (Siedebereich 90 bis 100°C) zusammen mit 12,5 g des Silans der mittleren Formel

$n\text{-}C_{16}H_{33}O(CH_2CH_2O)_2(CH_2)_3Si(CH_3)Cl_2$

unter intensivem Rühren 48 h unter Rückfluß erhitzt. Nach dem Abkühlen wird filtriert. Der Rückstand wird im Soxhlet 24 h mit Toluol extrahiert. Das Produkt wird bei 15 Torr und 60°C getrocknet. Aus der Elementaranalyse ergibt sich ein Kohlenstoffgehalt von 7,6 % C.

**Beispiel 4**

50 g einer feinteiligen pyrogenen Kieselsäure mit einer spezifischen Oberfläche von 50 $m^2/g$ werden zusammen mit 4,5 g γ-Chlorpropyltriethoxysilan in 800 ml Benzin (Siedebereich 35 bis 40°C) unter Rühren 20 h unter Rückfluß erhitzt. Nach dem Abkühlen wird das Produkt abfiltriert. Der Rückstand wird im Soxhlet 24 h mit Toluol extrahiert. Ein Teil des Produktes wird für analytische Zwecke bei 15 Torr ($20 \cdot 10^2$ Pa) und 60°C getrocknet. Die Elementaranalyse ergibt 1,5 % C und 1,0 % Cl.

40 g der mit Chlorpropyltriethoxysilan modifizierten feinteiligen Kieselsäure werden mit 3,99 g des Natriumsalzes eines ethoxylierten Fettalkohols der mittleren Formel

$n\text{-}C_{16}H_{33}O(CH_2CH_2O)_2H$

in 600 ml trockenem Toluol 16 h unter starkem Rühren) zum Rückfluß erhitzt. Das Produkt wird abfiltriert und bei 15 Torr ($20 \cdot 10^2$ Pa) und 60°C getrocknet, anschließend im Soxhlet zunächst mit Wasser und anschließend mit Methanol extrahiert und wiederum getrocknet. Die Elementaranalyse ergibt 6,2 % C und <0,1 % Cl.

**Beispiel 5**

100 g eines bei 180°C getrockneten Aluminiumoxids einer Teilchengröße von 0,063 bis 0,2 mm werden in 800 ml Ligroin (Siedebereich 90 bis 100°C) zusammen mit 3,3 g des Silans der mittleren Formel

$C_{13}H_{27}O(CH_2CH_2O)_{15}(CH_2)_3Si(OCH_3)_3$

unter intensivem Rühren 20 h unter Rückfluß und Feuchtigkeitsausschluß erhitzt. Nach dem Abkühlen wird filtriert. Der Rückstand wird im Soxhlet 24 h mit Toluol extrahiert. Das Produkt wird bei 60°C und 15 Torr ($20 \cdot 10^2$ Pa) getrocknet. Die Elementaranalyse ergibt einen Kohlenstoffgehalt von 1,7 % C.

**Beispiel 6**

Spaltung einer Emulsion des Typs Wasser-in-Erdöl

Als siliciumorganischer Spalter wird ein Polyoxyalkylenpolysiloxan-Blockcopolymeres folgender Struktur eingesetzt

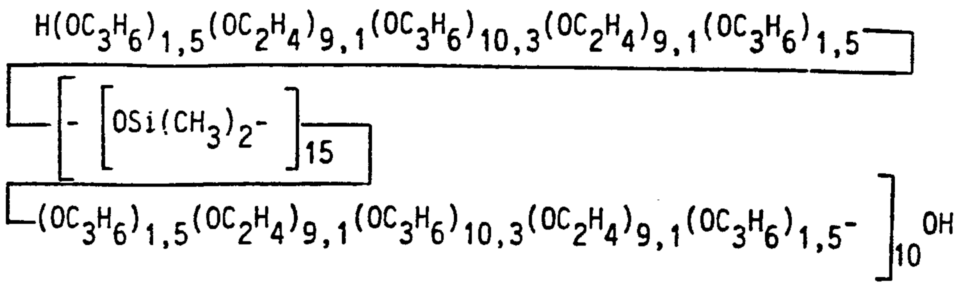

Dieser Spalter ist in der DE-PS-1 937 130 beschrieben.

Der siliciumorganische Spalter wird mit 5 % der modifizierten Kieselsäure aus Beispiel 1 versetzt und mit Toluol zu einer 1 %-igen Lösung (bezogen auf Gesamtwirkstoff) verdünnt. Vor der Anwendung wird der Feststoff in der Lösung mit Ultraschall fein dispergiert. Außerdem wird der siliciumorganische Spalter mit 5 % einer nicht modifizierten pyrogenen Kieselsäure mit der spezifischen Oberfläche von 200 $m^2/g$, wie sie in Beispiel 1 verwendet wird, versetzt. Es ergeben sich drei Spalterzubereitungen, die vergleichend getestet werden:

A: siliciumorganischer Spalter (1 % Toluol)
B: siliciumorganischer Spalter (0,95 %) + modifizierte Kieselsäure gemäß Beispiel 1 (0,05 % in Toluol)
C: siliciumorganischer Spalter (0,95 %) + nicht modifizierte Kieselsäure (0,05 % in Toluol)

Die wasserhaltigen Rohöle entstammen norddeutschen Quellen, sie enthalten 32 % (Rohöl I) bzw. 48 % (Rohöl II) Wasser.

Die Spalterzubereitungen werden in Form ihrer toluolischen Lösungen bzw. Suspensionen zu den Rohölemulsionen gegeben und durch kräftiges Schütteln verteilt. Die Wirkstoffkonzentration beträgt 30 ppm, worin der Anteil der erfindungsgemäß modifizierten Kieselsäure 1,5 ppm ausmacht. Die mit Spalter versetzten Rohölproben werden im Wasserbad auf 50°C erwärmt. Die Wasserabscheidung wird beobachtet und die folgenden Ergebnisse werden erzielt:

| Spalter | Zubereitung | Wasserabscheidung in ml<br>in Klammern: % vom insgesamt enthaltenen Wasser | | |
|---|---|---|---|---|
| | | nach 10 Min. | 30 Min. | 180 Min. |
| Rohöl I | A | 0 | 0 | 4 (13 %) |
| | B | 2 (6 %) | 14 (44 %) | 28 (88 %) |
| | C | 0 | 3 ( 9 %) | 11 (34 %) |
| Rohöl II | A | 0 | 20 (42 %) | 31 (65 %) |
| | B | 0 | 32 (67 %) | 44 (92 %) |
| | C | 4 (8 %) | 30 (63 %) | 32 (67 %) |

Zubereitung B erfindungsgemäß
Zubereitung A, C nicht erfindungsgemäß

**Beispiel 7**

Spaltung einer Emulsion des Typs Wasser-in-Erdöl

Glasröhrchen mit 5 mm Innendurchmesser werden an einem Ende spitz ausgezogen. Ein Wattepfropfen wird in die Glasröhrchen gesteckt und bis gegen die Verjüngung geschoben; der Wattepfropfen weist schließlich eine Länge von 5 mm auf. Die Glasröhrchen werden entweder mit 1,8 g des in Beispiel 5 beschriebenen modifizierten Aluminiumoxids oder mit 1,7 g eines unbehandelten Aluminiumoxids gefüllt und auch am anderen Ende zu einer Spitze ausgezogen, so daß die Länge der Röhrchen 6 bis 7 cm beträgt. Sie fassen neben den Feststoffen etwa 2 ml Flüssigkeit. Die Glasröhrchen werden senkrecht in ein Röhrchen gesteckt, welches einen Innendurchmesser von 12 mm aufweist, mit zwei Schlauchansätzen versehen ist und oben und unten mit Hilfe eines Gummiringes gegen das innere Röhrchen abgedichtet ist. Diese Vorrichtung ermöglicht es, die Feststoffpackung mit Hilfe eines Thermostaten zu temperieren.

Einem wasserhaltigen Rohöl einer norddeutschen Quelle, welches 35 % Wasser enthält, werden bei Raumtemperatur 50 ppm des siliciumorganischen Spalters, wie er in Beispiel 6 beschrieben ist, in Form seiner Lösung in Toluol zugesetzt.

In vier Versuchen wird sowohl Rohöl, welches Spalter enthält, als auch nicht mit Spalter versetztes Rohöl mit einer Geschwindigkeit von 3 ml/h sowohl durch eine Packung mit unbehandeltem Aluminiumoxid als auch durch eine Packung mit modifiziertem Aluminiumoxid gepumpt. Die Packungen werden auf 50°C temperiert. Nachdem jeweils 20 ml Rohöl durch eine Packung gepumpt worden sind, werden in einem kalibrierten Auffanggefäß die Mengen abgeschiedenen Wassers in ml bestimmt und prozentual auf die insgesamt enthaltene Menge Wasser bezogen. Die folgenden Ergebnisse werden erhalten:

| | Rohöl ohne Spalter | Rohöl mit 50 ppm Spalter |
|---|---|---|
| Aluminiumoxid unbehandelt | 0 | 2 (29 %) |
| Aluminiumoxid behandelt | 1,5 (22 %) | 6 (86 %) |

**Beispiel 8**

Entschäumung einer Tensidlösung

a) Zur Herstellung der Entschäumerzubereitungen wird sowohl eine hydrophobe Kieselsäure, die in Entschäumerzubereitungen des Standes der Technik eingesetzt wird, als auch eine Kieselsäure, die Gegenstand dieser Erfindung ist, mit Hilfe eines hochtourigen Rührers in Methylsiliconöl der Viskosität 980 $mm^2 \cdot sec^{-1}$ fein dispergiert.

Bei der zum Vergleich herangezogenen hydrophoben Kieselsäure handelt es sich um eine pyrogene Kieselsäure, die durch eine spezifische Oberfläche von 120 $m^2/g$ und eine mittlere Primärteilchengröße von 16 nm charakterisiert ist. Die Darstellung und Charakterisierung der eingesetzten erfindungsgemäßen Kieselsäure ist in Beispiel 3 beschrieben.

Entschäumerzubereitung A:
15 % hydrophobe Kieselsäure des Standes der Technik in Siliconöl
Entschäumerzubereitung B:
30 % hydrophobe Kieselsäure des Standes der Technik in Siliconöl
Entschäumerzubereitung C:
15 % erfindungsgemäße Kieselsäure in Siliconöl
Entschäumerzubereitung D:
30 % erfindungsgemäße Kieselsäure in Siliconöl

Für die Überprüfung auf ihre Wirksamkeit werden die Entschäumerzubereitungen mit Toluol verdünnt, so daß 1 %-ige Lösungen entstehen.

b) Ein 2-l-Meßzylinder wird mit einem Gaseinleitungsrohr, das am Boden in einer Glasfritte endet, ausgerüstet. In diesen Meßzylinder gibt man 1 l einer 0,1 %-igen wäßrigen Lösung eines Tensidgemisches aus 3 Teilen eines mit 10 Mol Ethylenoxid umgesetzten Fettalkoholgemisches und 1 Teil dodecylbenzolsulfonsaurem Natrium. Mit einem gleichmäßigen Luftstrom von 6 l/Min. wird 1 l Schaum erzeugt. Die Lösung des Entschäumers wird so dosiert, daß der Schaum gerade zusammenbricht. Die dazu benötigte Menge Entschäumer ist in der Tabelle in der zweiten Spalte angegeben. In den folgenden 60 Minuten wird weiterhin ein gleichmäßiger Luftstrom von 6 l/Min. durch die Tensidlösung geleitet. Hat sich während dieser Zeit erneut ein Schaumvolumen von 1 l aufgebaut, so wird erneut Entschäumer dosiert, so daß der Schaum wiederum zusammenbricht. Nach 60 Minuten wird der Test beendet. Die insgesamt benötigte Entschäumermenge ist in der dritten Spalte der Tabelle angegeben.

**Tabelle**

| Entschäumerzubereitung | Anfangsdosierung* ppm | Gesamtdosierung* ppm |
|---|---|---|
| A nicht erfindungsgemäß | 30 | 50 |
| B nicht erfindungsgemäß | 30 | 90 |
| C erfindungsgemäß | 10 | 30 |
| D erfindungsgemäß | 10 | 30 |

*bezogen auf Siliconöl + Kieselsäure

## Patentansprüche

1. Oxidische oder silicatische Teilchen, insbesondere mit einer spezifischen Oberfläche von mindestens 50 $m^2/g$ und einer Teilchengröße von $\leq 40$ nm, wobei die an der Oberfläche befindlichen Hydroxylgruppen zumindest zu einem Teil durch organische Gruppen ersetzt sind, dadurch gekennzeichnet, daß die organischen Gruppen der Formel

$$R^1O(C_nH_{2n}O)_xR^2\text{-}\underset{\substack{|\\R^4}}{\overset{\substack{R^3\\|}}{Si}}\text{-}O\text{-}$$

$R^1$ = Alkylrest mit mindestens 9 Kohlenstoffatomen oder Alkylphenylrest mit mindestens 14 Kohlenstoffatomen,
$R^2$ = zweiwertiger Kohlenwasserstoffrest mit 2 bis 5 Kohlenstoffatomen,
$R^3$, $R^4$ = gleich oder verschieden und jeweils ein niederer Alkylrest mit 1 bis 4 Kohlenstoffatomen, der Rest Y (Y = hydrolysierbare Gruppe, insbesondere die Gruppe -Cl, $-OR^5$ oder $-NR^8_2$, wobei $R^5$ ein Alkylrest mit 1 bis 4 Kohlenstoffatomen und $R^8$ ein Wasserstoffrest oder ein Alkylrest mit bis 4 Kohlenstoffatomen ist), der anteilige Sauerstoffrest $O_{0,5}$ oder Hydroxyrest,
n = 2 oder 3, jedoch bei mindestens 90 Mol-% der Gruppen n = 2,
x = 1 bis 50
entsprechen.

2. Verfahren zur Herstellung der modifizierten Teilchen nach Anspruch 1, dadurch gekennzeichnet, daß man die oxidischen oder silicatischen Teilchen
a) mit 5 bis 50 Gew.-% einer Verbindung der allgemeinen Formel

$$R^1O(C_nH_{2n}O)_xR^2\text{-}\underset{\substack{|\\R^7}}{\overset{\substack{R^6\\|}}{Si}}\text{-}Y$$

wobei
$R^1$, $R^2$, Y, n und X die gemäß Anspruch 1 angegebene Bedeutung haben und
$R^6$, $R^7$ niedere Alkylreste mit 1 bis 4 Kohlenstoffatomen oder Y-Reste sind,
gegebenenfalls in Gegenwart eines inerten flüssigen Mediums und gegebenenfalls bei Temperaturen bis 150°C umsetzt oder
b) mit 2 bis 25 Gew.-% einer Verbindung der allgemeinen Formel

$$X\text{-}R^2\text{-}\underset{\displaystyle R^7}{\overset{\displaystyle R^6}{Si}}\text{-}Y$$

wobei

X ein Chlor- oder Bromrest ist,

gegebenenfalls in Gegenwart eines inerten flüssigen Mediums und gegebenenfalls bei Temperaturen bis 150°C umsetzt und das erhaltene Produkt mit äquimolaren Mengen einer Verbindung der allgemeinen Formel

$$R^1O(C_nH_{2n}O)_xM$$

wobei

M ein Natrium- oder Kaliumrest ist, in einem inerten flüssigen Medium, gegebenenfalls bei erhöhter Temperatur,

umsetzt.

3. Verwendung der modifizierten oxidischen oder silicatischen Teilchen nach Anspruch 1 zum Destabilisieren von Wasser-in-Öl-Emulsionen und zur Zerstörung von Schäumen wäßriger Systeme.

**Revendications**

1. Particules d'oxydes ou de silicates, ayant en particulier une aire spécifique d'au moins 50 $m^2/g$ et une granulométrie $\leqslant 40$ nm, les groupes hydroxyles se trouvant sur la surface étant, au moins en partie, remplacés par des groupes organiques, caractérisées en ce que les groupes organiques correspondent à la formule

$$R^1O(C_nH_{2n}O)_xR^2\text{-}\underset{\displaystyle R^4}{\overset{\displaystyle R^3}{Si}}\text{-}O\text{-}$$

$R^1$ est un radical alkyle ayant au moins 9 atomes de carbone ou un radical alkylphényle ayant au moins 14 atomes de carbone,

$R^2$ est un radical hydrocarboné bivalent ayant de 2 à 5 atomes de carbone,

$R^3$ ou $R^4$ sont identiques et différents et représentent chacun un radical alkyle ayant de 1 à 4 atomes de carbone, le radical Y (Y est un groupe hydrolysable, en particulier le groupe -Cl, $-OR^5$ ou $-NR_2{}^8$, où $R^5$ est un radical alkyle ayant de 1 à 4 atomes de carbone et $R^8$ est un radical hydrogène ou un radical alkyle ayant de 1 à 4 atomes de carbone), un radical oxygène partagé $O_{0,5}$, ou le radical hydroxy,

n vaut 2 ou 3, mais, dans au moins 90 % en moles des groupes, $n = 2$,

x vaut de 1 à 50.

2. Procédé pour la préparation des particules modifiées selon la revendication 1, caractérisé en ce qu'on fait réagir les particules d'oxydes ou de silicates

a) avec 5 à 50 en poids d'un composé de formule générale

$$R^1O(C_nH_{2n}O)_xR^2\text{-}\underset{\displaystyle R^7}{\overset{\displaystyle R^6}{Si}}\text{-}Y$$

où

$R^1$, $R^2$, Y, n et x ont les significations données dans la revendication 1, et

$R^6$ et $R^7$ représentent chacun un radical alkyle inférieur ayant de 1 à 4 atomes de carbone ou un radical Y,

éventuellement en présence d'un milieu liquide inerte et éventuellement à des températures inférieures ou égales à 150°C, ou bien

b) avec 2 à 25 en poids d'un composé de formule générale

$$X\text{-}R^2\text{-}\overset{\displaystyle R^6}{Si}\text{-}Y$$

|
$R^7$

dans laquelle
X est un radical chloro ou bromo,
éventuellement en présence d'un milieu liquide inerte et éventuellement à des températures inférieures ou égales à 150° C, et qu'on fait réagir le produit obtenu sur des quantités équimolaires d'un composé de formule générale

$$R^1O(C_nH_{2n}O)_xM$$

où
M est un radical sodium ou potassium, dans un milieu liquide inerte, éventuellement à haute température.

3. Utilisation des particules d'oxydes ou de silicates modifiées selon la revendication 1, pour déstabiliser des émulsions eau dans l'huile et pour détruire des mousses de systèmes aqueux.

## Claims

1. Oxide or silicate particles, in particular having a specific surface area of at least 50 $m^2/g$ and a particle size of $\leqslant$40 nm, at least some of the hydroxyl groups present at the surface being replaced by organic groups, characterized in that the organic groups correspond to the formula

$$R^1O(C_nH_{2n}O)_xR^2\text{-}\overset{\overset{\Large R^3}{|}}{\underset{\underset{\Large R^4}{|}}{Si}}\text{-}O\text{-}$$

$R^1$ is an alkyl radical having at least 9 carbon atoms or an alkylphenyl radical having at least 14 carbon atoms,
$R^2$ is a divalent hydrocarbon radical having 2 to 5 carbon atoms,
$R^3$ and $R^4$ are identical or different and are each a lower alkyl radical having 1 to 4 carbon atoms, the radical Y (Y = a hydrolyzable group, in particular the group - Cl, $-OR^5$ or $-NR_2{}^8$, where $R^5$ is an alkyl radical having 1 to 4 carbon atoms and $R^8$ is a hydrogen radical or an alkyl radical having 1 to 4 carbon atoms), the proportionate oxygen radical $O_{0,5}$ or a hydroxyl radical,
n is 2 or 3 but at at least 90 mol % of the groups n is 2,
x is 1 to 50.

2. Process for the preparation of the modified particles according to Claim 1, characterized in that the oxide or silicate particles are reacted
a) with 5 to 50 % by weight of a compound of the general formula

$$R^1O(C_nH_{2n}O)_xR^2\text{-}\overset{\overset{\Large R^6}{|}}{\underset{\underset{\Large R^7}{|}}{Si}}\text{-}Y$$

wherein
$R^1$, $R^2$, Y, n and x have the meaning given in Claim 1 and
$R^6$ and $R^7$ are lower alkyl radicals having 1 to 4 carbon atoms or Y radicals,
optionally in the presence of an inert liquid medium and optionally at temperatures of up to 150° C, or
b) with 2 to 25 % by weight of a compound of the general formula

$$X\text{-}R^2\text{-}\overset{\overset{\Large R^6}{|}}{\underset{\underset{\Large R^7}{|}}{Si}}\text{-}Y$$

wherein
X is a chlorine or bromine radical, optionally in the presence of an inert liquid medium and optionally at

temperatures of up to 150°C, and the product obtained is reacted with equimolar amounts of a compound of the general formula

$$R^1O(C_nH_{2n}O)_xM$$

wherein

M is a sodium or potassium atom, in an inert liquid medium, optionally at elevated temperatures.

3. Use of the modified oxide or silicate particles according to Claim 1 for destabilizing water-in-oil emulsions and destroying foams of aqueous systems.